# EUROPÄISCHE PATENTSCHRIFT

(11) **EP 1 980 496 B1**
(45) Veröffentlichungstag und Bekanntmachung des Hinweises auf die Patenterteilung: **13.07.2011**
(21) Anmeldenummer: 08007192.1
(22) Anmeldetag: 11.09.2006
(51) Int. Cl.: B65D 33/16, B65B 51/04

(54) **Kombination einer Vorrichtung zum Verschliessen eines Verpackungsschlauchs und einer Verschlussklammer**
Combination of a device for sealing a packaging tube and a clip
Combinaison d'un dispositif de fermeture d'un tube d'emballage et d'une agrafe

(30) Priorität: 09.09.2005 DE 202005014340 U
(43) Veröffentlichungstag der Anmeldung: 15.10.2008
(62) Teilanmeldung aus: 06791964.7
(73) Patentinhaber: Tipper Tie technopack GmbH, 21509 Glinde (DE)
(72) Erfinder: Simon, Dieter, 21465 Reinbek (DE)
(74) Vertreter: Glawe, Delfs, Moll

(56) Entgegenhaltungen:
- EP-A1- 0 541 950
- EP-A1- 0 962 337
- WO-A-90/07459
- DE-C1- 3 811 978
- NL-A- 302 024
- US-A- 3 728 774

## Beschreibung

Die Erfindung betrifft eine Vorrichtung zum Verschließen eines Verpackungsschlauchs mittels Verschlussklammern, wie sie in der WO 2007/028646 A2 beschrieben sind. Eine solche Verschlussklammer umfasst zwei Klammerschenkel und einen zwischen den Klammerschenkeln angeordneten Klammerboden, wobei die Klammerschenkel parallel zueinander und rechtwinklig zum Klammerboden angeordnet sind. Die Klammerschenkel haben in Richtung des jeweils anderen Klammerschenkels weisende, ebene Innenflächen, der Klammerboden hat eine die Innenflächen der Klammerschenkel verbindende, ebene Innenfläche. Die erfindungsgemäße Vorrichtung umfasst einen Zuführkanal zum Zuführen der Verschlussklammern, einen Stempel zum Bewegen der Verschlussklammern im Zuführkanal und zwei den Verformungsweg der Klammerschenkel definierende Gleitrillen.

Die Verschlussklammern kommen insbesondere bei der Wurstherstellung zum Einsatz. Durch ein Füllrohr wird Wurstbrät in den Verpackungsschlauch eingebracht. Wenn eine Verpackungseinheit gefüllt ist, wird das Ende des Verpackungsschlauchs zu einem füllgutfreien Abschnitt gerafft, und die Verschlussklammer wird zum dauerhaften Verschließen der Verpackungseinheit um den füllgutfreien Abschnitt herumgebogen.

Verschlussklammern dieser Art sind seit langem bekannt, vgl. etwa EP 0 951 427, EP 0 962 337. Sie werden üblicherweise verarbeitet, indem die Klammerschenkel unter dem Druck eines auf den Klammerboden wirkenden Stempels entlang von zwei in einer Matrize gebildeten Gleitrillen gezwungen werden. Die Klammerschenkel verbiegen sich dabei entsprechend der von den Gleitrillen vorgegebenen Bahn. Die Gleitrillen sind so gestaltet, dass die Verschlussklammer in Umfangsrichtung um den Verpackungsschlauch herumgebogen wird. Zugleich wird die Verschlussklammer in Seitenrichtung verformt, so dass die Klammerschenkel nach dem Umschließen des Verpackungsschlauchs nicht aneinander stoßen, sondern aneinander vorbeigeführt werden. Die Kombination aus der Verformung in Umfangsrichtung mit der Verformung in Seitenrichtung führt zu einer Helixform der Verschlussklammer.

Da die Klammerschenkel im geschlossenen Zustand nicht aneinander stoßen, kann darauf verzichtet werden, die Länge der Verschlussklammer exakt an den Umfang des gerafften Verpackungsschlauchs anzupassen. Es kann eine Verschlussklammer verwendet werden, deren Länge den Umfang des gerafften Verpackungsschlauchs überschreitet. Die überschüssige Länge wird dadurch ausgeglichen, dass die beiden Klammerschenkel aneinander vorbeigeführt werden und sich um eine der überschüssigen Länge entsprechende Strecke überlappen.

Beim Einführen der Verschlussklammer in die Gleitrillen liegt der geraffte Abschnitt des Verpackungsschlauchs zwischen den Klammerschenkeln. Die Klammerschenkel werden also zugleich sowohl außen am Verpackungsschlauch vorbei als auch entlang des Eingangsbereichs der Gleitrillen geführt. Um dies zu ermöglichen, sind die Klammerschenkel der Verschlussklammer parallel zueinander angeordnet.

Bei ihrer Bewegung entlang der Gleitrillen erfährt die Verschlussklammer eine komplexe Verformung. Zum einen ist die Verformung nicht - wie beim einfachen Umknicken einer Verschlussklammer - lokal eng begrenzt; vielmehr müssen sich die Klammerschenkel während des Biegevorgangs stetig an die durch die Gleitrillen vorgegebene Bahn anpassen und unterliegen dadurch einer kontinuierlich aufeinanderfolgenden Vielzahl von einzelnen Verformungen, die in ihrer Summe die Gesamtverformung ergeben. Zum zweiten ist die Verformung nicht auf eine Biegerichtung beschränkt, vielmehr kombinieren sich die verschiedene Biegerichtungen zu einer komplexen Verformung.

Bislang werden für Verschlussvorgänge, bei denen eine Verformung in Umfangsrichtung mit einer Verformung in Seitenrichtung kombiniert wird, vorwiegend Verschlussklammern mit einem annähernd runden Querschnitt verwendet, vgl. etwa EP 0 951 427, DE 199 04 521. Verschlussklammern mit einem runden Querschnitt haben den Vorteil, dass sie sich in jeder Richtung mit dem gleichen Kraftaufwand verbiegen lassen. Sie haben zudem den Vorteil, dass die Auflagefläche der Verschlussklammer auf dem Verpackungsschlauch und damit die Belastung des Verpackungsschlauchs auch dann konstant bleiben, wenn die Verschlussklammer verdreht ist.

Verschlussklammern mit rundem Querschnitt haben den Nachteil, dass sie wegen ihrer gewölbten Außenfläche lokal einen großen Druck auf den Verpackungsschlauch ausüben. Es kann zu Beschädigungen des Verpackungsschlauchs kommen.

Weiterhin sind für die kombinierte Verformung in Umfangsrichtung und in Seitenrichtung auch Verschlussklammern mit einer ebenen Innenfläche und einem beispielsweise trapezförmigen Querschnitt bereits zum Einsatz gekommen. Die ebene Innenfläche kann grundsätzlich den Vorteil bieten, dass sie im geschlossenen Zustand eben auf dem Verpackungsschlauch aufliegt und dadurch die lokale Belastung des Verpackungsschlauchs verringert. Es hat sich jedoch gezeigt, dass die Verschlussklammern bisweilen bei dem komplexen Verformungsvorgang auch in sich verdreht werden. In diesem Fall liegt die ebene Innenfläche schräg auf dem Verpackungsschlauch auf, eine Kante der Innenfläche übt einen konzentrierten Druck auf den Verpackungsschlauch aus. Die lokale Belastung des Verpackungsschlauchs ist dann sogar größer als bei einer Verschlussklammer mit rundem Querschnitt.

Bei einer alternativen Art von Verschlussklammern stoßen die Enden der Klammerschenkel im geschlossenen Zustand mit ihren Stirnflächen aneinander, vgl. etwa EP 0 452 338. Ein Nachteil dieser sog. Kopf-an-Kopf-Verschlüsse ist es, dass ihre Länge exakt auf den Umfang des zu umschließenden gerafften Verpackungsschlauchs abgestimmt sein muss. Ist die Verschlussklammer zu lang, stoßen die beiden Enden aneinander, bevor der Verpackungsschlauch fest umschlossen ist. Ist die Verschlussklammer zu kurz, kann sie den Verpackungsschlauch nicht vollständig umschließen. In beiden Fällen ist der Verschluss nicht hinreichend fest.

Selbst wenn die Länge der Kopf-an-Kopf-Verschlussklammern auf den Umfang des gerafften Verpackungsschlauchs abgestimmt ist, wird ein weniger sicherer Verschluss als bei den gattungsgemäßen Verschlussklammern erreicht. Zum Öffnen der Verschlussklammer aus dem geschlossenen Zustand muss alleine die Biegesteifigkeit des Materials überwunden werden, zwischen den Klammerschenkeln besteht keine Verbindung, die einen zusätzlichen Halt bietet. Verschlussklammern mit aneinander vorbei geführten Klammerschenkeln hingegen können so verformt werden, dass die Seitenflächen der beiden Klammerschenkel direkt aufeinanderliegen. Um die Verschlussklammer in diesem Fall aus dem geschlossenen Zustand wieder zu öffnen, muss sowohl die Biegesteifigkeit des Materials als auch die Reibung zwischen den beiden aneinander anliegenden Klammerschenkeln überwunden werden.

Der Nachteil, dass die Länge der Kopf-an-Kopf-Verschlussklammer auf den Umfang des gerafften Verpackungsschlauchs abgestimmt sein muss, wird in Kauf genommen, weil die Verarbeitung der Kopf-an-Kopf-Verschlussklammern wesentlich einfacher ist. Die Verschlussklammern brauchen nur in Umfangsrichtung um den gerafften Verpackungsschlauch herumgebogen werden, eine Verformung in Seitenrichtung ist nicht erforderlich. Aus diesem Grund sind die Verschlussklammern zumeist so gestaltet, dass sie in Biegerichtung dünn sind, um eine einfache Verformung zu ermöglichen. Ihre Stabilität gewinnen die Verschlussklammern aus einer größeren Ausdehnung in Seitenrichtung, vgl. EP 0 452 338.

Es wurde versucht, diesen Nachteil der Kopf-an-Kopf-Verschlussklammern zu vermeiden, indem die Enden der Klammerschenkel so gestaltet wurden, dass sie ohne seitliche Verformung der Verschlussklammer aneinander vorbeigeführt werden können, vgl. EP 0 842 096. Diese Art von Verschlussklammern ist in der Herstellung aufwändig, da die Schenkel jeder Verschlussklammer einzeln in die gewünschte Form gebracht werden müssen.

Der Erfindung liegt die Aufgabe zu Grunde, eine Vorrichtung zum Verschließen von Verpackungsschläuchen mit Verschlussklammern der eingangs genannten Art vorzustellen, so dass das Risiko von Beschädigungen des Verpackungsschlauchs vermindert ist. Die Aufgabe wird gelöst durch die Merkmale des unabhängigen Anspruchs. Vorteilhafte Ausführungsformen finden sich in den Unteransprüchen.

Der vorgenannte Verschlussklammertyp zeichnet sich dadurch aus, dass die Klammerschenkel ebene Seitenflächen aufweisen und dass die Seitenflächen im Querschnitt des Klammerschenkels betrachtet senkrecht zu den Innenflächen angeordnet sind und dass die Querschnittshöhe der Verschlussklammer kleiner ist als die Querschnittsbreite der Verschlussklammer.

Zunächst werden einige Begriffe definiert.

Der Zustand der Verschlussklammer, in dem die Klammerschenkel rechtwinklig zum Klammerboden angeordnet sind, wird als offener Zustand bezeichnet. Der Zustand, in dem die Verschlussklammer den Verpackungsschlauch verschließt, wird als geschlossener Zustand bezeichnet.

Die Angaben innen, außen, seitlich beziehen sich auf den Querschnitt der Verschlussklammer. Über die Innenfläche der Verschlussklammer sind die Klammerschenkel gegenüber dem Klammerboden umgebogen worden, um die rechtwinklige Anordnung zwischen den Klammerschenkeln und dem Klammerboden zu erzeugen. Die Außenfläche liegt der Innenfläche gegenüber. Die Seitenflächen sind die zwischen der Innenfläche und der Außenfläche liegenden Flächen.

Von einer Verformung in Umfangsrichtung wird gesprochen, wenn die Verschlussklammer über ihre Innenfläche verbogen wird. Bei einer Verformung in Seitenrichtung wird die Verschlussklammer über eine ihrer Seitenflächen verbogen.

Die Begriffe Querschnittsbreite und Querschnittshöhe beziehen sich auf den Querschnitt der Klammerschenkel. Die Querschnittsbreite ist der Abstand zwischen den beiden Seitenflächen. Da die Seitenflächen senkrecht zur Innenfläche angeordnet sind, sind die Seitenflächen parallel zueinander, die Querschnittsbreite ist also konstant. Die Querschnittshöhe ist die maximale Ausdehnung, die ein Klammerschenkel zwischen der Innenfläche und der der Innenfläche gegenüberliegenden Außenfläche hat.

Als Länge der Verschlussklammer wird die Summe aus der Länge der Klammerschenkel und der Länge des Klammerbodens bezeichnet.

Die ebenen Seitenflächen können während des Verformvorgangs an erfindungsgemäßen Führungsflächen entlanggeführt werden. Die Führungsflächen verhindern, dass die kombinierte Verformung in Umfangsrichtung und in Seitenrichtung zugleich in einem Verdrehen der Verschlussklammer resultiert. Im geschlossenen Zustand der Verschlussklammer am Ende des Verformvorgangs ist die Ausrichtung der Innenfläche exakt definiert. Die Innenfläche liegt eben auf dem Verpackungsschlauch auf und übt einen gleichmäßigen Druck aus.

Im Stand der Technik wurde der genauen Ausgestaltung der Seitenflächen keine Aufmerksamkeit zuteil. Das Ausgangsmaterial bei der Herstellung von Verschlussklammern ist regelmäßig ein Materialstrang mit einem runden oder ovalen Querschnitt. Ist eine ebene Außenfläche oder ebene Innenfläche gewünscht, wird der Materialstang gewalzt, bis ebene Flächen mit den gewünschten Ausmaßen entstanden sind. Die Seitenflächen behalten bei einer solchen Bearbeitung der Innenfläche und Außenfläche ihre nach außen gewölbte Form. Daran ändert sich auch nichts, wenn in schematischen Zeichnungen mitunter auf die Darstellung der Wölbung verzichtet wurde und die gewölbten Seitenflächen eben erscheinen.

Die erfindungsgemäße Verschlussklammer vereint zwei Vorzüge in sich. Zum ersten ist es nicht erforderlich, die Länge der Verschlussklammer exakt auf den Umfang des gerafften Verpackungsschlauchs abzustimmen, da die Klammerschenkel aneinander vorbeigeführt werden und eine überschüssige Länge dadurch ausgeglichen wird. Zum zweiten verteilt sich der von der Verschlussklammer auf den Verpackungsschlauch ausgeübte Druck gleichmäßig über eine größere Fläche, so dass die Belastung des Verpackungsschlauchs gering gehalten wird.

Im Stand der Technik muss bislang eine Entscheidung zwischen diesen Vorteilen getroffen werden. Mit der Auswahl eines Vorzugs ist es bisher stets verbunden, einen korrespondierenden Nachteil in Kauf zu nehmen. Die Kopf-an-Kopf-Verschlussklammern bieten zwar eine große Auflagefläche und schonen damit den Verpackungsschlauch. Sie müssen aber in der Länge exakt an den Umfang des gerafften Verpackungsschlauchs angepasst sein. Die bisher für die kombinierte Verformung in Umfangsrichtung und in Seitenrichtung verwendeten Verschlussklammern üben zuweilen lokal einen zu großen Druck auf den Verpackungsschlauch aus.

In einer vorteilhaften Ausführungsform haben die Klammerschenkel den Innenflächen gegenüberliegende, ebene Außenflächen. Die Außenfläche kann während des Verformvorgangs ebenfalls an Führungsflächen entlanggeführt werden und die Führung der Verschlussklammer während des Verformvorgangs verbessern.

Um die lokale Belastung des Verpackungsschlauchs klein zu halten, sollen die Innenflächen der Klammerschenkel und des Klammerbodens möglichst groß sein. Die größte Fläche würde man erreichen, wenn sich die Innenfläche über die komplette Querschnittsbreite der Verschlussklammer erstreckte. In diesem Fall wäre die Innenfläche jedoch von scharfen Kanten begrenzt, so dass die Gefahr von Beschädigungen des Darms wieder stiege. Vorteilhafterweise erstrecken sich die ebenen Innenflächen der Klammerschenkel deswegen über mindestens 70%, vorzugsweise mindestens 80% weiter vorzugsweise mindestens 90% der Querschnittsbreite. Die Innenfläche des Klammerbodens ist vorzugsweise mindestens so breit wie die Innenflächen der Klammerschenkel.

Um das Aufbringen von Informationen zu erleichtern, ist es wünschenswert, an der Außenseite eine möglichst große ebene Fläche zur Verfügung zu haben. Da scharfe Kanten auch hier unerwünscht sind, erstrecken sich die ebenen Außenflächen der Klammerschenkel vorzugsweise über mindestens 70%, weiter vorzugsweise mindestens 80%, weiter vorzugsweise mindestens 90% der Querschnittsbreite. Die am Übergang zu den Seitenflächen liegenden Kanten der Außenfläche und Innenfläche sind vorzugsweise abgerundet.

In einer vorteilhaften Ausführungsform erstrecken sich die ebenen Seitenflächen der Klammerschenkel über mindestens 70%, vorzugsweise mindestens 80%, weiter vorzugsweise mindestens 90% der Querschnittshöhe. Wenn sowohl die Seitenflächen als auch die Außenfläche und Innenfläche sich abgesehen von den abgerundeten Kanten über die gesamte Querschnittsbreite und Querschnittshöhe erstrecken, hat die Verschlussklammer einen nahezu rechteckigen Querschnitt. Die Verschlussklammer kann in diesem Fall so verformt werden, dass die Außenseiten der Klammerschenkel im geschlossenen Zustand nebeneinander liegen und nur durch einen kleinen Spalt getrennt sind. Informationen, die auf den Außenseiten der Klammerschenkel aufgebracht sind, können auf einen Blick erfasst werden. Es ist zum einen möglich, auf den beiden Klammerschenkeln jeweils separate Informationen aufzubringen und die Informationen auf diese Weise zweizeilig darzustellen. Alternativ kann die aus den Außenseiten der beiden Klammerschenkel gebildete größere Fläche dazu genutzt werden, größere Symbole aufzubringen. Durch die größeren Symbole wird die Lesbarkeit verbessert. Die Informationen können beispielsweise eingeprägt oder mit einem Aufkleber aufgebracht werden.

Das Verhältnis von Querschnittshöhe der Verschlussklammer zu Querschnittsbreite der Verschlussklammer ist bevorzugt kleiner als 0,9 : 1, weiter vorzugsweise kleiner als 0,8 : 1.

Die Außenflächen, Innenflächen und Seitenflächen können an den Enden der Klammerschenkel in ebene Stirnflächen übergehen. Die Kanten der Stirnflächen sind vorzugsweise abgerundet, damit während des Herumführens der Klammerschenkel um den Darm keine Beschädigungen durch scharfe Kanten entstehen.

Vorzugsweise hat die Verschlussklammer einen über ihre Längserstreckung konstanten Querschnitt. Durch einen konstanten Querschnitt wird es ermöglicht, die Verschlussklammern aus einem endlosen Materialstrang mit gleichförmigem Querschnitt durch einfaches Abtrennen herzustellen. Einem konstanten Querschnitt in diesem Sinne steht es nicht entgegen, wenn der Querschnitt sich aufgrund einer Biegeverformung an einzelnen Stellen leicht verändert.

Verschlussklammern sind allgemein darauf ausgelegt, einmal verschlossen zu werden und danach geschlossen zu bleiben. Ein späteres Öffnen ist nicht vorgesehen. Indem die Seitenflächen der Klammerschenkel parallel zueinander angeordnet sind, kann die Verschlussklammer so verformt werden, dass die Seitenflächen der Klammerschenkel im geschlossenen Zustand flächig aufeinanderliegen. Die Reibung zwischen den Seitenflächen verbessert die Festigkeit des Verschlusses. Eine weitere Verbesserung kann erreicht werden, wenn die Seitenflächen der Klammerschenkel mit einer Oberflächenstruktur versehen sind. Die Oberflächenstruktur kann eine beliebige die Reibung erhöhende Form haben, die einzelnen Elemente der Struktur müssen jedoch so klein sein, dass die Seitenflächen insgesamt als ebene Flächen erhalten bleiben.

Vorzugsweise schließen die Klammerschenkel in ebenen Stirnflächen ab und sind die Kanten der Stirnflächen abgerundet.

Es hat sich gezeigt, dass die Verschlussklammer mit einer Querschnittsbreite zwischen 1,5 mm und 6 mm, vorzugsweise zwischen 2 mm und 4,5 mm und einer Querschnittshöhe zwischen 1 mm und 5 mm, vorzugsweise zwischen 1,2 mm und 3,5 mm geeignet dimensioniert ist, um typische Verpackungseinheiten bei der Wurstherstellung zu verschließen. Die Länge der Verschlussklammer kann für die Wurstherstellung zwischen 10 mm und 70 mm, vorzugsweise zwischen 20 mm und 50 mm liegen. Das Verhältnis zwischen der Länge der Klammerschenkel und der Länge des Klammerbodens liegt typischerweise zwischen 3 : 1 und 1:1. Die Verschlussklammer bietet eine gute Stabilität bei gleichzeitig guter Verformbarkeit, wenn sie aus Aluminium oder Aluminiumlegierungen gefertigt ist.

Für die industrielle Verwendung und eine maschinelle Zuführung der Verschlussklammern ist es wünschenswert, die Verschlussklammern in magazinierter Form zur Verfügung zu stellen. Vorteilhafterweise wird dazu eine Mehrzahl von Verschlussklammern derart zu einer Kette angeordnet, dass die jeweils nachfolgende Verschlussklammer seitlich an der jeweils vorangehenden Verschlussklammer anliegt. Eine auf eine nachfolgende Verschlussklammer ausgeübte Kraft kann auf diese Weise auf vorangehende Verschlussklammern übertragen werden. Die Verschlussklammern können also durch eine einheitliche auf die Kette wirkende Kraft nacheinander einer Verarbeitungsvorrichtung zugeführt werden.

Es ist nicht erforderlich, dass die Verschlussklammern flächig aufeinander liegen. Vielmehr reicht es aus, wenn die Verschlussklammern mit einem für die Kraftübertragung ausreichenden Teil aneinander grenzen. Damit die Kette entlang von Krümmungen geführt werden kann, ist es vorteilhaft, wenn die Verschlussklammern im Bereich des Klammerbodens aneinander anliegen.

Um den Transport zu erleichtern, können die Verschlussklammern mit einem Klebeband verbunden sein. Alternativ oder zusätzlich können die Verschlussklammern auf einer Schiene aufliegen.

Mit der erfindungsgemäßen Vorrichtung zum Verschließen eines Verpackungsschlauchs können Verschlussklammern in den vorstehend beschriebenen Ausführungsorten verarbeitet werden. Insbesondere ist es bei der Verarbeitung der Verschlussklammern entscheidend, dass sie während des Verbiegevorgangs sauber geführt werden. In einem kombinierten Biegevorgang muss die Verschlussklammer zugleich in Umfangsrichtung und in Seitenrichtung verbogen werden. Es muss sichergestellt werden, dass die Verschlussklammer sich während des kombinierten Biegevorgangs nicht verdreht.

Für den kombinierten Biegevorgang umfasst die Vorrichtung einen Zuführkanal, aus dem die Klammerschenkel zu zwei den Verformungsweg der Klammerschenkel definierenden Gleitrillen zugeführt werden. Ein Stempel bewegt die Verschlussklammern relativ zum Zuführkanal und erzwingt dadurch die Verformung der Klammerschenkel gemäß dem von den Gleitrillen vorgegebenen Verformungsweg.

Um ein Verdrehen der Verschlussklammern zu verhindern, umfassen die Gleitrillen jeweils zwei sich gegenüber liegende, ebene Seitenführungsflächen, die in einem an die Querschnittsbreite der Klammerschenkel angepassten Abstand parallel zueinander angeordnet sind. An den Seitenführungsflächen können die Seitenflächen der Klammerschenkel auf einem definierten Weg entlang geführt werden. Zu Beginn des Verbiegevorgangs ist die Verschlussklammer noch vollständig innerhalb des Zuführkanals, an den Führungsflächen der Gleitrillen wird also nur der bereits aus dem Zuführkanal ausgetretene Teil der Klammerschenkel geführt.

Durch die Seitenführungsflächen ist die Ausrichtung der Klammerschenkel innerhalb der Gleitrillen fest definiert, ein Verdrehen der Klammerschenkel wird verhindert. Dadurch ist sichergestellt, dass die Innenfläche der Verschlussklammer sauber auf dem Verpackungsschlauch aufliegt und der Verpackungsschlauch gleichmäßig belastet wird. Die Gefahr von Beschädigungen des Verpackungsschlauchs ist vermindert.

Für die Führung der Außenseiten der Klammerschenkel können die Gleitrillen Bodenführungsflächen umfassen, die im Querschnitt der Gleitrillen betrachtet eben sind. Eine gute Anpassung an die im Querschnitt rechteckigen Klammerschenkel wird erreicht, wenn die Bodenführungsfläche im Querschnitt betrachtet senkrecht zu den Seitenführungsflächen angeordnet ist.

Um das Verbiegen der Verschlussklammer in Seitenrichtung zu ermöglichen, muss der Klammerboden, gegenüber dem die Schenkel in Seitenrichtung verbogen werden sollen, eine sichere Führung haben. Zu diesem Zweck kann der Zuführkanal Führungsflächen aufweisen, die an die Seitenflächen des Klammerbodens angepasst sind. Entlang diesen Führungsflächen können die Seitenflächen des Klammerbodens während des Verbiegens geführt werden.

Mitunter besteht das Bedürfnis, auf der Verschlussklammer Zeichen anzubringen. Die Zeichen können Informationen enthalten, beispielsweise über den Inhalt des Verpackungsschlauchs, das Datum der Verarbeitung oder ähnliche Informationen. Die Zeichen können in der Form aufgebracht werden, dass sie in die Verschlussklammer eingeprägt werden, denkbar ist es aber auch, dass ein Aufkleber auf die Verschlussklammern aufgeklebt wird. Die Vorrichtung kann eine Einrichtung zum Aufbringen von derartigen Zeichen auf den Außenflächen der Klammerschenkel umfassen. Da die Außenflächen der Klammerschenkel im geschlossenen Zustand der Verschlussklammer nebeneinander liegen, können an dieser Stelle mehr Informationen untergebracht werden als bei herkömmlichen Verschlussklammern. Der Betrachter kann alle dort aufgebrachten Informationen auf einen Blick wahrnehmen, ohne die Verschlussklammer hin- und herdrehen zu müssen. Besonders vorteilhaft können an dieser Stelle Informationen aufgebracht werden, wenn die Klammerschenkel in Umfangsrichtung jeweils um 180° gegenüber dem Klammerboden umgebogen werden. Auf diese Weise bilden die Außenflächen der beiden Klammerschenkel eine gemeinsame, ineinander übergehende Fläche, die für die Informationen zur Verfügung steht.

Die Erfindung wird im Folgenden unter Bezugnahme auf die beigefügten Zeichnungen anhand einer vorteilhaften Ausführungsform beispielhaft beschrieben. Es zeigen:
- Fig. 1: eine Draufsicht auf eine Verschlussklammer;
- Fig. 2: einen Querschnitt durch die Verschlussklammer aus Fig. 1;
- Fig. 3: eine schematische darstellte erfindungsgemäße Vorrichtung im Querschnitt;
- Fig. 4: eine Matrize als Detail der Vorrichtung aus Fig. 3;
- Fig. 5: einen Querschnitt durch die Matrize aus Fig. 4;
- Fig. 6: einen Querschnitt durch die Vorrichtung aus Fig. 3;
- Fig. 7: eine Draufsicht auf eine erfindungsgemäße Verschlussklammer im geschlossenen Zustand;
- Fig. 8: die Ansicht aus Fig. 7 in einer anderen Ausführungsform; und
- Fig. 9: eine Kette von erfindungsgemäßen Verschlussklammern.

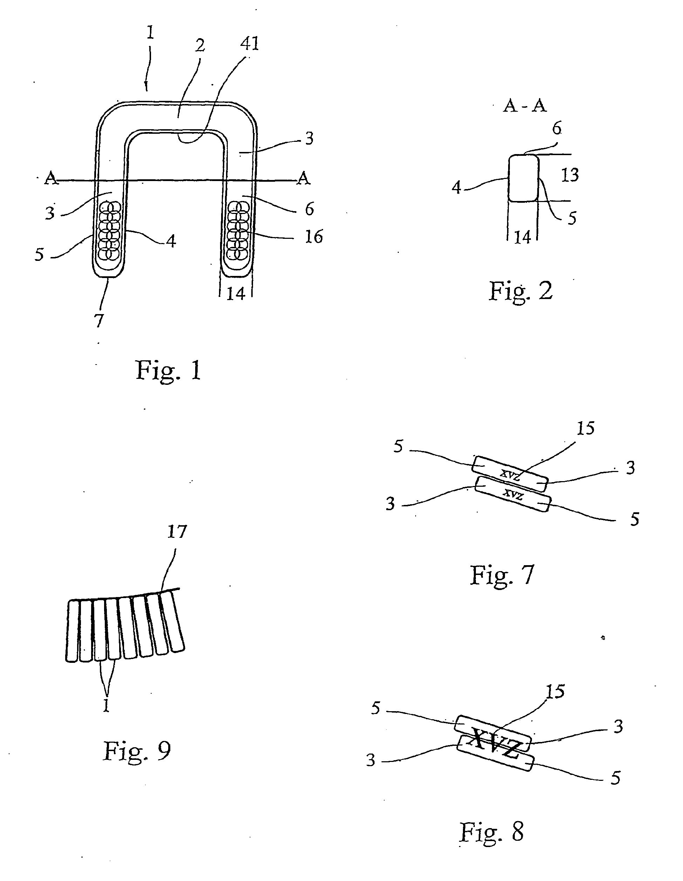

Eine Verschlussklammer 1 in Fig. 1 umfasst einen Klammerboden 2 und zwei gegenüber dem Klammerboden 2 rechtwinklig angeordnete Klammerschenkel 3. Die Verschlussklammer 1 ist gemäß Fig. 2 im Querschnitt abgesehen von den abgerundeten Kanten rechteckig. Die Innenfläche 4 und die Außenfläche 5 erstrecken sich jeweils über nahezu die gesamte Querschnittsbreite. Die Seitenflächen 6 erstrecken sich über nahezu die gesamte Querschnittshöhe. Die Klammerschenkel 3 gehen an ihren Enden über in Stirnflächen 7. Die Kanten zwischen den Stirnflächen 7 und den angrenzenden Flächen sind ebenfalls abgerundet. Abgesehen von den abgerundeten Kanten der Stirnflächen und leichten, möglicherweise durch das Umbiegen der Klammerschenkel 3 gegenüber dem Klammerboden 2 entstandenen Abweichungen hat die Verschlussklammer 1 über ihre gesamte Länge einen konstanten Querschnitt. Die Klammerschenkel 3 liegen frei, die Verschlussklammer 1 ist also nicht über ihre Klammerschenkel 3 mit weiteren Verschlussklammern verbunden. Auf den Außenseiten 6 der Klammerschenkel 3 ist eine Oberflächenstruktur 16 aufgebracht.

Die Innenfläche 4 und die Außenfläche 5 haben in Querrichtung eine größere Abmessung als die Seitenflächen 6. Es ist also die Querschnittsbreite 13 der Verschlussklammer 1 größer als die Querschnittshöhe 14.

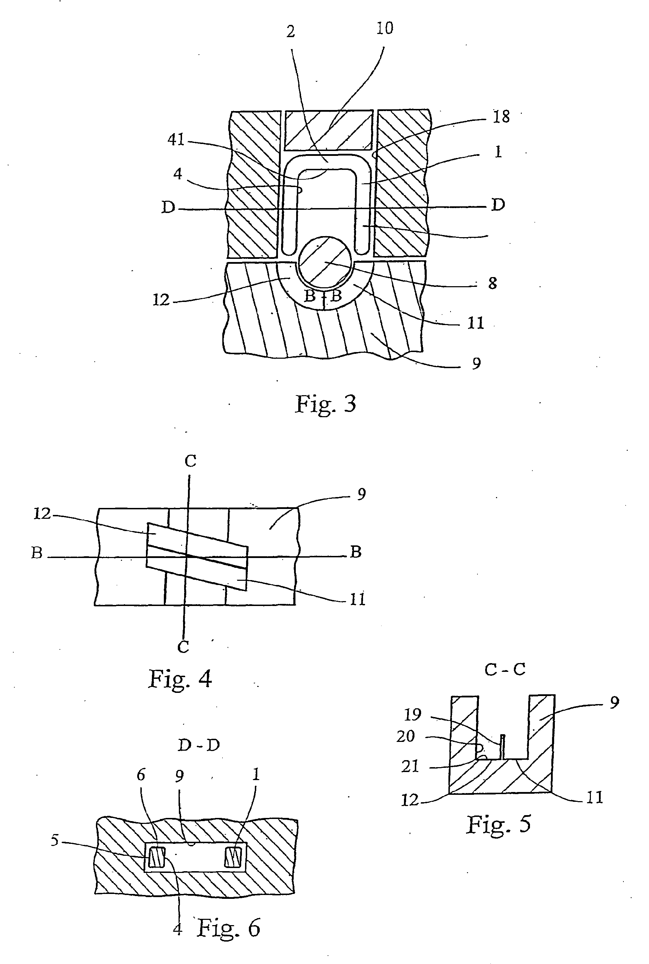

Die Verschlussklammer 1 ist dazu bestimmt, mit Hilfe einer in Fig. 3 dargestellten Vorrichtung zum Verschließen von Verpackungsschläuchen verwendet zu werden. In Fig. 3 befindet sich ein geraffter Abschnitt 8 eines Verpackungsschlauchs oberhalb einer Matrize 9. Die Verschlussklammer 1 befindet sich in einem Zuführkanal 18 der Vorrichtung und ist so positioniert, dass die beiden Klammerschenkel 3 beiderseits des Verpackungsschlauchs 8 angeordnet sind. Mit Hilfe eines im Zuführkanal 18 beweglich gelagerten Stempels 10 kann Druck auf den Klammerboden 2 der Verschlussklammer 1 ausgeübt werden.

Die Matrize 9 umfasst, wie in der Draufsicht in Fig. 4 ersichtlich ist, zwei Gleitrillen 11 und 12. Jede der beiden Gleitrillen 11, 12 ist zum Führen eines der Klammerschenkel 3 der Verschlussklammer 1 bestimmt. Die Klammerschenkel 3 können deswegen zugleich in die Gleitrillen 11 eingeführt und an dem gerafften Abschnitt des Verpackungsschlauchs vorbeigeführt werden, weil die beiden Klammerschenkel 3 parallel zueinander angeordnet sind.

Unter dem Druck des Stempels 10 werden die Klammerschenkel 3 in die Gleitrillen 11, 12 eingeführt. Bei der weiteren Bewegung des Stempels 10 werden die Klammerschenkel 3 entlang der durch die Gleitrillen 11 und 12 vorgegebenen Bahnen gezwungen und verbiegen sich entsprechend. In Fig. 3 sind die Gleitrillen 11, 12 in einem Schnitt entlang der Linie B-B aus Fig. 4 dargestellt.

Am Ende des Verbiegevorgangs liegt die Verschlussklammer 1 mit den Innenflächen 4 der Klammerschenkel und der Innenfläche 41 des Klammerbodens auf dem Verpackungsschlauch 8 auf. Die Klammerschenkel 3 sind gemäß dem durch die Gleitrillen 11, 12 vorgegebenen Weg umgebogen und liegen mit ihren Seitenflächen 6 aneinander. Wegen der Elastizität des Materials der Verschlussklammer liegen die Seitenflächen 6 der Klammerschenkel auch dann einander, wenn die Gleitrillen 19, 20 einen kleinen seitlichen Abstand zueinander haben und die Verschlussklammer deswegen während des Verbiegevorgangs in Seitenrichtung etwas über die endgültige Stellung hinaus gespannt wird.

Um eine sichere Führung der Verschlussklammer 1 während des Verbiegevorgangs zu gewährleisten, haben die Gleitrillen 11, 12, wie in Fig. 5 ersichtlich, einen aus den Seitenführungsflächen 19, 20 und der Bodenführungsfläche 21 gebildeten rechteckigen Querschnitt. Die Verschlussklammer 1 liegt mit ihren Seitenflächen 6 an den Seitenführungsflächen 19, 20 und mit ihrer Außenfläche 5 an der Bodenführungsfläche 21 an. Die Verschlussklammer 1 wird dadurch in jeder Richtung exakt geführt, so dass ein Verdrehen der Verschlussklammer ausgeschlossen ist.

Gemäß der Schnittdarstellung der Fig. 6 ist auch der Zuführkanal 18 an die Form der Verschlussklammer 1 angepasst. Die Verschlussklammer 1 wird durch die Führungsflächen des Zuführkanals 18 anhand ihrer Seitenflächen 6 und ihrer Außenfläche 5 sicher geführt, so dass auch die Position des noch im Zuführkanal 18 befindlichen Teils der Verschlussklammer 1 während des gesamten Biegevorgangs exakt definiert ist.

Im geschlossenen Zustand liegen die beiden Klammerschenkel 3 der Verschlussklammer bei geeigneter Ausgestaltung der Gleitrillen 11 und 12 nebeneinander, so dass die Außenflächen 5 der Klammerschenkel 3 aneinander grenzen. Auf den Außenflächen 5 können Zeichen 15 zur Information über Eigenschaften des verpackten Produkts aufgebracht sein. Es kann, wie in Fig. 7 dargestellt, jeder Klammerschenkel mit eigenen Zeichen versehen werden, so dass eine größere Informationsmenge aus derselben Blickrichtung wahrgenommen werden kann. Denkbar ist es, wie in Fig. 8 gezeigt, aber auch, die Zeichen über die Außenflächen 5 beider Klammerschenkel 3 gemeinsam zu erstrecken. Die Zeichen 15 sind dann größer und damit besser lesbar.

Fig. 9 zeigt eine Kette von mit einem Klebeband 17 verbundenen Verschlussklammern 1. Die Verschlussklammern 1 liegen im Bereich des Klammerbodens 2 aneinander, so dass eine Druckkraft von einer Verschlussklammer auf die nächste übertragen werden kann. In auf diese Weise magazinierter Form können die Verschlussklammern gut maschinell verarbeitet werden.

Die Verschlussklammer bietet den Vorteil, dass sie mit ihrer breiten Innenfläche 4, 41 auf dem Verpackungsschlauch 8 aufliegt und deswegen die Belastung des Verpackungsschlauchs 8 gering hält. Um das Ziel einer geringen Belastung des Verpackungsschlauchs zu erreichen, muss sichergestellt sein, dass die Verschlussklammer tatsächlich mit ihrer Innenfläche 4 eben auf dem Verpackungsschlauch aufliegt. Liegt die Verschlussklammer schräg oder ist sie verdreht, übt eine der Kanten zwischen der Innenfläche 4, 41 und den Seitenflächen 6 einen erhöhten Druck auf den Verpackungsschlauch 8 aus und erhöht die Belastung. Dass die Verschlussklammer mit ihrer Innenfläche 4 eben auf dem Verpackungsschlauch 8 aufliegt, wird dadurch gewährleistet, dass die Verschlussklammer 1 während des Biegevorgangs anhand der Führungsflächen im Zuführkanal 18 und der Führungsflächen in den Gleitrillen 11, 12 auf einem exakt definierten Weg geführt wird.

## Patentansprüche

1. Kombination einer Vorrichtung zum Verschließen eines Verpackungsschlauchs (8) mit einem Zuführkanal (18) zum Zuführen von Verschlussklammern (1), einem Stempel (10) zum Bewegen der Verschlussklammern (1) im Zuführkanal (18) und zwei den Verformungsweg der Klammerschenkel (3) definierenden Gleitrillen (11, 12) und einer Verschlussklammer (1) mit zwei Klammerschenkeln (3) und einem zwischen den Klammerschenkeln (3) angeordneten Klammerboden (2), wobei die Klammerschenkel (3) parallel zueinander und rechtwinklig zum Klammerboden (2) angeordnet sind, mit an den Klammerschenkeln (3) angeordneten, in Richtung des jeweils anderen Klammerschenkels (3) weisenden, ebenen Innenflächen (4) und mit einer am Klammerboden (2) angeordneten, die Innenflächen (4) der Klammerschenkel (3) verbindenden, ebenen Innenfläche (4), **dadurch gekennzeichnet, dass** die Klammerschenkel (3) ebene Seitenflächen (6) aufweisen und die Seitenflächen (6) im Querschnitt der Klammerschenkel (3) betrachtet senkrecht zu den Innenflächen (4) der Klammerschenkel (3) angeordnet sind, dass die Gleitrillen (11, 12) jeweils zwei sich gegenüberliegende, ebene Seitenführungsflächen (19, 20) umfassen und dass die Führungsflächen in einem an die Querschnittsbreite (13) der Verschlussklammern (1) angepassten Abstand parallel zueinander angeordnet sind und dass die Querschnittshöhe (14) der Verschlussklammer (1) kleiner ist als die Querschnittsbreite (13) der Verschlussklammer (1).

2. Kombination nach Anspruch 1, **dadurch gekennzeichnet, dass** die Gleitrillen (11, 12) Bodenführungsflächen (21) umfassen, die im Querschnitt der Gleitrillen (11, 12) betrachtet eben sind.

3. Kombination nach Anspruch 1 oder 2, **dadurch gekennzeichnet, dass** der Zuführkanal (18) an die Seitenflächen (6) des Klammerbodens (2) angepasste Führungsflächen aufweist.

4. Kombination nach einem der Ansprüche 1 bis 3, **dadurch gekennzeichnet, dass** sie eine Einrichtung zum Aufbringen von Zeichen (15) auf den Außenflächen (6) der Klammerschenkel (3) umfasst.

## Claims

1. Combination of an arrangement for closing a packaging tube (8), having a supply channel (18) for supplying closing clips (1), a punch (10) for moving the closing clips (1) in the supply channel (18) and two slide grooves (11, 12) that define the deformation path of the clip legs (3), and a closing clip (1) having two clip legs (3) and a clip base (2) arranged between the clip legs (3), wherein the clip legs (3) are arranged parallel to one another and at right angles to the clip base (2), having planar inner surfaces (4) which are oriented in the direction of the other clip leg (3) in each case, and having a planar inner surface (4) which is arranged on the clip base (2) and connects the inner surfaces (4) of the clip legs (3), **characterized in that** the clip legs (3) have planar lateral surfaces (6), and the lateral surfaces (6), as seen in the cross section of the clip legs (3), are arranged perpendicularly to the inner surfaces (4) of the clip legs (3), **in that** the slide grooves (11, 12) comprise in each case two mutually opposite, planar lateral guide surfaces (19, 20), and **in that** the guide surfaces are spaced apart parallel to one another by a distance adapted to the cross-sectional width (13) of the closing clips (1), and **in that** the cross-sectional height (14) of the closing clip (1) is less than the cross-sectional width (13) of the closing clip (1).

2. Combination according to Claim 1, **characterized in that** the slide grooves (11, 12) comprise base guide surfaces (21) which are planar as seen in the cross section of the slide grooves (11, 12).

3. Combination according to Claim 1 or 2, **characterized in that** the supply channel (18) has guide surfaces that are adapted to the lateral surfaces (6) of the clip base (2).

4. Combination according to one of Claims 1 to 3, **characterized in that** it comprises a device for applying signs (15) to the outer surfaces (6) of the clip legs (3).

## Revendications

1. Combinaison formée par un dispositif pour fermer un tube souple d'emballage (8) avec un conduit d'admission (18) pour l'acheminement de pinces de fermeture (1), un poinçon (10) pour déplacer les pinces de fermeture (1) dans le conduit d'admission (18), et deux gorges de glissement (11, 12) définissant la voie de déformation des branches (3) des pinces, et par une pince de fermeture (1) avec deux branches (3) et un fond (2) disposé entre les branches (3), les branches (3) de la pince étant disposées parallèlement entre elles et perpendiculairement au fond (2) de la pince, avec des faces intérieures (4) planes, disposées sur les branches (3) de la pince et orientées respectivement vers l'autre branche (3), et avec une face intérieure (4) plane, disposée sur le fond (2) de la pince et reliant les faces intérieures (4) des branches (3) de la pince, **caractérisée en ce que** les branches (3) des pinces comportent des faces latérales (6) planes et lesdites faces latérales (6), par référence à une coupe transversale des branches (3), sont disposées perpendiculairement aux faces intérieures (4) des branches (3) des pinces, **en ce que** les gorges de glissement (11, 12) comprennent chacune deux surfaces de guidage latérales (19, 20) planes face à face, et **en ce que** les surfaces de guidage sont disposées parallèlement entre elles à une distance ajustée à la largeur de section (13) des pinces de fermeture (1), et **en ce que** la hauteur de section (14) des pinces de fermeture (1) est inférieure à la largeur de section (13) des pinces de fermeture (1).

2. Combinaison selon la revendication 1, **caractérisée en ce que** les gorges de glissement (11, 12) comprennent des surfaces de guidage (21) au niveau de leur fond, lesquelles sont planes par référence à une coupe transversale des gorges de glissement (11, 12).

3. Combinaison selon la revendication 1 ou 2, **caractérisée en ce que** le conduit d'admission (18) comporte des surfaces de guidage ajustées aux faces latérales (6) du fond (2) des pinces.

4. Combinaison selon l'une quelconque des revendications 1 à 3, **caractérisée en ce qu'**elle comprend un dispositif pour appliquer des logos (15) sur les faces extérieures (6) des branches (3) des pinces.
